# EUROPEAN PATENT APPLICATION

(11) **EP 2 937 207 A1**
(43) Date of publication of application: **28.10.2015**
(21) Application number: 13856378.8
(22) Date of filing: 22.10.2013
(51) Int. Cl.: B29C 70/38, B25J 15/06, B32B 38/18, B29C 70/44, B29C 70/54, B65H 3/08, B32B 5/24, B65H 5/22, B65G 47/91, B66C 1/02, A41H 43/02

(54) **SYSTEM FOR HANDLING POROUS FABRICS**

(30) Priority: 23.11.2012 ES 201201170
(71) Applicant: Industrias Delta Vigo S.L., 26815 Redondela-Pontevedra (ES)
(72) Inventor: COMENDEIRO LINDIN, Jorge, E-26815 Redondela-Pontevedra (ES)
(74) Representative: Garcia-Cabrerizo y del Santo, Pedro Maria
(86) International application number: PCT/ES2013/000234
(87) International publication number: WO 2014/080049

(57) **Abstract**

The invention relates to a system comprising a support (1) including a frame (2) for receiving the layer of porous fabric (3) to be handled in order to position same on another layer of porous fabric (3') already placed on a general supporting structure (9) and to form a piece of fabric using multiple layers. The invention also includes a transport element (8) connected to an air flow generator (5) for transferring the porous fabric layer (3) from the frame (2)-equipped support (1) to the transport element (8) and for handling and releasing the fabric layer (3) in order to place same on the porous fabric layer (3') located on the general supporting structure (9). The aforementioned generator (5) can vary the rotation direction of the air flow in order to produce a negative pressure or a dynamic pressure during the handling of the corresponding porous fabric layer (3).

## Description

### OBJECT OF THE INVENTION

The present invention relates to a system for handling porous fabrics, usable in the manufacture of carbon fibre pieces with dry fabrics.

The object of the invention is to make handling operations of porous fabrics easier for forming pieces of fabric, by superimposition of layers.

The invention fits within the technical field of manufacture of textile items or pieces in which the major raw material are dry porous fabrics.

### BACKGROUND OF THE INVENTION

Currently, in the field of manufacture of carbon fibre pieces with dry and porous fabrics, there are problems of accuracy and repeatability of the positioning of fabrics, and although there are fabric cutting processes which are guaranteed by numerical control means, as well as processes for achieving deformations of fabrics on the plane, however there is a major problem that arises as a consequence of distortions of the different fibres forming the fabric, as well as the relative positioning between the different layers of fabric forming a piece.

These accuracy problems subsequently generate strength defects in the pieces, because the fibres are not placed in the position on which they should be to provide a suitable strength, i.e. for which they were designed.

### DESCRIPTION OF THE INVENTION

The system for handling porous fabrics so as to form pieces of fabric, focuses on addressing the process of gripping, holding and transporting each dry porous fabric, i.e. each layer, for releasing and positioning it on another layer of fabric below the one to be conveniently attached or fixed, so as to by whatever the number of layers, forming the corresponding textile piece.

More specifically, the system of the invention, using a support on which the layer of fabric and a transport element for handling the fabric until its placement and positioning on the immediately lower layer are positioned, or directly on a tool, has the particularity that both the support and the transport element are rigid parts and are affected by holes for the passage of an airflow.

The concerned support includes means which should ensure the isostatism with a frame associated therewith, having this frame the shape of the fabric, ensuring the geometry of said layer of fabric, therefor said frame is machined with the outer contour of the fabric.

In turn, the transport and handling element will also provide a geometrical guarantee, with means ensuring the positioning relative to the frame, although said elements can be removed if the assembly is mounted on an automatic system, as a gantry machine, robot, etc.

On the underside o said transport element, and by virtue of the holes for flow passage, the layer of dry porous fabric which is handled will remain stuck.

To grip, hold and carry out the transporting and positioning function of each layer of fabric, an adjustable air flow generator which can set a change in the flow direction is used, so in a direction, for example of descent of the airflow provided by the generator, the positioning of the layer of dry porous fabric, on the lower support is conducted, whereas if the flow direction is reverted, and it effects a negative pressure between the transport surface and the fabric, accompanied by a dynamic pressure in the edges, a sucking of that layer of fabric on el transport element will occur, the layer being plated to the underside thereof and allowing that transport element to carry out the handling, positioning and subsequent fixing of the layer of fabric on other layers placed below.

To ensure the maintenance of the geometry of the first dry porous fabric, a vacuum system similar to the ones existing on the fabric cutting machines can be used, whereas for carrying out the detachment of the layer of dry porous fabric and it fixation on the immediately lower layer, a change of airflow direction is carried out, so as to push and detach the layer of dry porous fabric from the transport element, depositing it on the immediately lower layer and fixing it to the latter by and adhesive which is activated through heated elements in combination with pressing means.

The process which is performed by the described system, includes the following operating phases:
- Positioning of the layer of dry porous fabric on the corresponding support, being this operation performed manually.
- Mounting of the flow generator together with the transport and handling element, on a robot.
- Activation of the generator system of the airflow system.
- Transfer of the layer of fabric placed on the support, on the transport element, by the negative pressure created by that air flow generator means.
- Positioning of the robot with the transport element and the air flow generator, on the releasing or loosening post of the layer of dry porous fabric.
- Activation of the holding means of la layer of fabric on the transport element.
- Reversion of the airflow direction in the flow generator, and corresponding detachment or releasing of the layer of fabric relative to the transport or handling element.
- Activation of the sticking means, consisting of activating and adhesive, through heated elements in combination with pressure elements, carrying out the attachment or fixation together of the layer of dry porous fabric which is being handled on the dry layer of porous fabric, on the structure on which the obtained piece should be positioned.
- Retreat of the robot to the resting position.
- Repeat of the cycle for each one of the layers of dry porous fabric to be placed on the layers located on the general supporting structure.

### DESCRIPTION OF THE DRAWINGS

To complete the description that is going to be made and to assist a better understanding of the characteristics of the invention, according to a preferred practical embodiment thereof, accompanying as an integral part of said description, a set of drawings are illustrative and not limiting character, it has been shown the following:
Figure 1.- Shows a schematic representation of a preferred embodiment of the system for handling porous fabrics made according to the object of the invention.
Figure 2. Shows a plan view of what is shown in the previous figure, without the air flow generator.
Figure 3.- Shows a view similar to the one of figure 1, but arranging a layer of dry porous fabric by transport elements, on a general supporting structure.
Figure 4. -Shows, finally, a view of the means taking part in the attachment or fixation together of two layers of dry porous fabric that have been handled according to the system of the invention.

### PREFERRED EMBODIMENT OF THE INVENTION

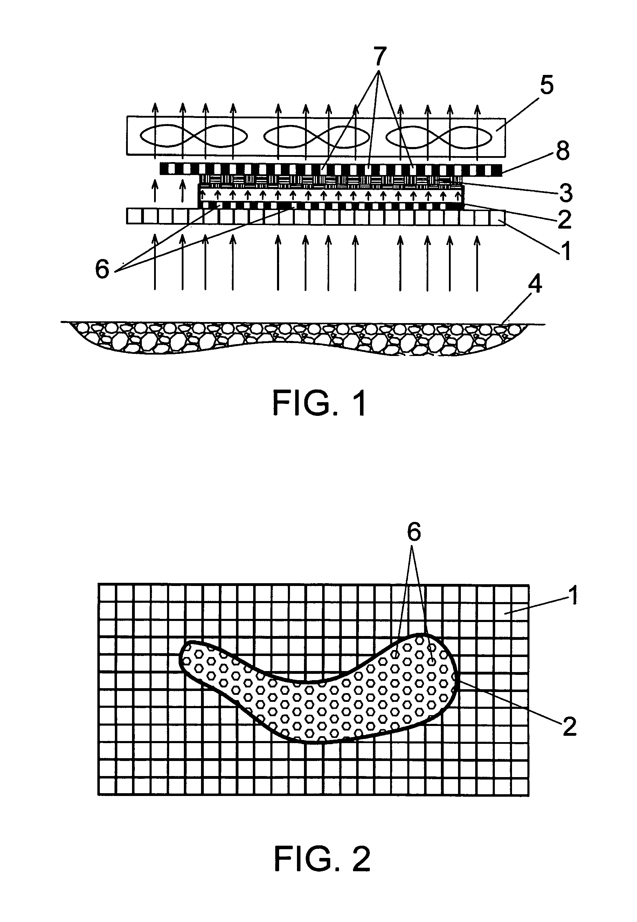

As can be seen in the mentioned figures, the system of the invention first comprises a support (1) including a frame (2), where the corresponding layer of porous fabric (3) is manually placed, with the support (1) having to be separated from the ground (4), as it is shown in figure 1, in order to avoid turbulences in the airflow.

The system also includes an air flow generator (5), and a transport and handling element (8) of the layer of fabric (3) itself, being this transport element (8) affected by holes (7) for the passage of airflow.

The support (1) including its frame (2) allows the maintenance of the geometry of the porous fabric (3), allowing in turn the passage of the airflow through holes (6) thereof.

The flow generator (5) must have enough capacity for creating a negative pressure in the top of the layer of porous fabric (3), and at the same time achieving an airspeed enough for generating a dynamic pressure that fixes the contours.

That air flow generator (5) will be able to revert the flow direction so as to allow the transfer of the layer of fabric (3) from the support (1) including the frame (2) to the transport element (8) itself.

Both the support (1) and the transport element (8) are rigid and their surface will have the shape corresponding to the surface of the layer of fabric (3) which is to be placed both in the support (2) and in the transport element (8), being that surface able to be flat so as to allow an embodiment of universal support, or to have a specific surface.

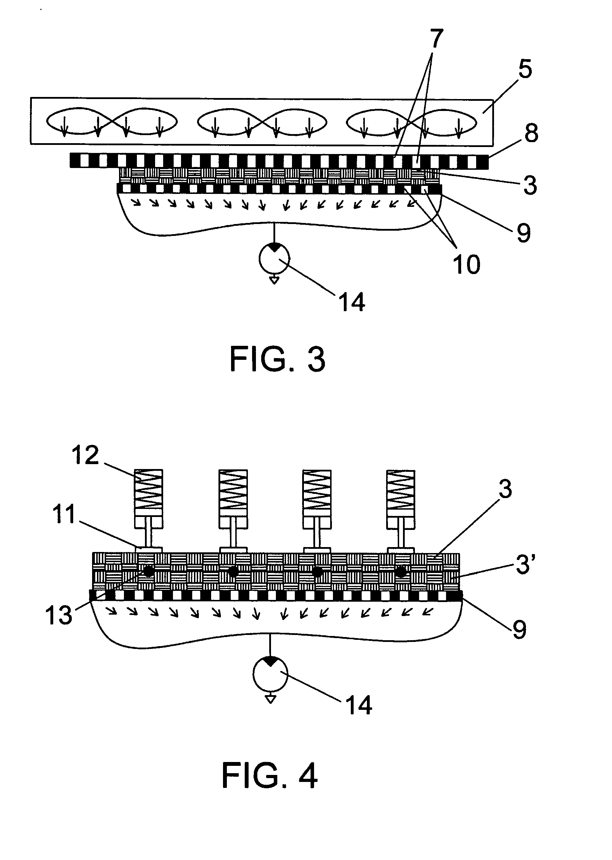

The different layers of fabric being handled and transported, must be placed on a general supporting structure, which will be also affected by holes (10) for the passage of air flow, as it is shown in that figure 3.

The transport element (8) may include means for securing the position of the layer of porous fabric (3) itself which is being handled, on the layer of porous fabric (3') already placed on the general supporting structure (9); as it is shown in figure 4.

Those means for securing the position of the layer of porous fabric (3) on the contiguous layer of porous fabric (3') may consist of heated means (11) in combination with pressing means (12), for activating the adhesive (13) through which the attachment and fixation together of both layers of porous fabric (3, 3') is made, as it is shown in figure 4.

Finally it has to be said that the post where the layers of porous fabric (3, 3'), etc., should be positioned will be provided with some means for ensuring the maintenance of the geometry of the porous fabric itself, being a possible solution an emptying system or element (14), as it is shown in figures 3 and 4, which is similar to the means and systems existing in fabric cutting machines.

Lastly it has to be said that the air flow generator (5) will be attached to the transport and handling element (8), and the assembly they both form will be the moving part of the system, so that the movement can be effected in multiple ways, i.e. manually, through an automated gantry, through a robot, etc.

## Claims

1. System for handling porous fabrics, usable in the manufacture of carbon fibre pieces with dry porous fabric, wherein operations of gripping, holding, transporting or handling, releasing, positioning and fixing a porous fabric on another one are performed, so as to achieve pieces of fabric, comprising a support (1) including a frame (2), having the shape of the layer of fabric (3) to be handled, as well as a transport element (8) including means ensuring the positioning of the porous fabric itself (3) on other layer of porous fabric (3') previously placed on a general supporting structure (9); **characterized in that** it includes an air flow generator means (5) by which a negative pressure for holding the layer of porous fabric (3) on the transport element (8) is created, as well as a dynamic pressure in the contour, so as to allow the handling of the porous fabric itself (3); being provided that the air flow generator (5) includes means for reverting the direction of said airflow, and for releasing the layer of porous fabric (3) with respect to the transport element (8) and its corresponding deposition and positioning on the layer of porous fabric (3') placed on the general supporting structure (9).

2. System for handling porous fabrics, according to claim 1, **characterized in that** the support (1) including the frame (2) for the porous fabric, is rigid and has a surface shape equal to the surface of the general support (9) on which said layer of porous fabric (3) is to be placed.

3. System for handling porous fabrics, according to claim 1, **characterized in that** the transport element (8) is rigid and has a surface shape equal to the surface of the general support (9) on which said layer of porous fabric (3) is to be placed.

4. System for handling porous fabrics, according to any of the preceding claims, **characterized in that** the support (1) including the frame (2) and the transport element (8) are affected by respective holes (6, 7) for airflow passage.

5. System for handling porous fabrics, according to any of the preceding claims, **characterized in that** the transport element (8) incorporates heated means (11) which, in combination with pressing elements (12), effects the attachment or fixation together of the layer of porous fabric (3) handled on other layer of porous fabric (3') previously placed on the general supporting structure (9).

6. System for handling porous fabrics, according to any of the preceding claims, **characterized in that** the zone of the general support (9) on which the layers of porous fabric (3, 3') are to be placed, has means (14) for ensuring the maintenance of the geometry of the corresponding layer of porous fabric, being said means able to consist of a vacuum system.
